# EUROPÄISCHE PATENTSCHRIFT

(11) **EP 2 989 041 B1**
(45) Veröffentlichungstag und Bekanntmachung des Hinweises auf die Patenterteilung: **14.06.2017**
(21) Anmeldenummer: 14720573.6
(22) Anmeldetag: 25.04.2014
(51) Int. Cl.: B66B 19/02

(54) **VERFAHREN ZUR GESCHWINDIGKEITSREGELUNG EINER KLEMM- UND HUB-VORRICHTUNG**
METHOD FOR REGULATING THE SPEED OF A CLAMPING AND LIFTING DEVICE
PROCÉDÉ DE RÉGLAGE DE LA VITESSE D'UN DISPOSITIF DE SERRAGE ET DE LEVAGE

(30) Priorität: 26.04.2013 DE 102013007292
(43) Veröffentlichungstag der Anmeldung: 02.03.2016
(73) Patentinhaber: SIEMAG TECBERG GmbH, 37508 Haiger (DE)
(72) Erfinder: EICHELHARDT, Peter, 35708 Haiger (DE); REFENIUS, Viktor, 35708 Haiger (DE); STADTBÄUMER, Nico, 35708 Haiger (DE)
(74) Vertreter: Harrison, Robert John
(86) Internationale Anmeldenummer: PCT/EP2014/058491
(87) Internationale Veröffentlichungsnummer: WO 2014/174095

(56) Entgegenhaltungen:
- DE-A1- 4 322 970
- US-A- 4 274 618
- US-A- 5 844 390
- US-A- 5 947 140
- Dorman Long Technology Limited: "DL-P40 Release 3.029.xx Computer Control System - Operations and Maintenance Manual", , 3. Januar 2012 (2012-01-03), XP055127643, Gefunden im Internet: URL:http://www.dormanlongtechnology.com/en /Products/heavy_lift_control_systems.htm [gefunden am 2014-07-08]

## Beschreibung

Die vorliegende Erfindung bezieht sich auf ein Verfahren zur Geschwindigkeitsregelung einer Klemm- und Hub-Vorrichtung.

Es ist eine bekannte Vorgehensweise an Ein- und Mehrseil-Koepe-Förderanlagen Klemm- und Hubvorrichtungen zu benutzen. Solch eine Vorrichtung kann alle Seile eines Fördertrums ohne aufwändige Vorbereitungen gleichzeitig klemmen und halten, heben oder absenken. Hydraulisch betätigte Klemmzylinder öffnen und schließen die Klemmen soweit, dass ein anfängliches Klemmen sicher erreicht wird. Die Klemmeinrichtungen sind an zwei Klemmbalken angeordnet, von denen der untere fest und der obere beweglich ausgeführt ist. Der obere Klemmbalken wird mittels Hubzylindern bewegt und ist somit für das Heben und Senken der Seile verantwortlich. Während der Leerhübe des oberen Klemmbalkens sind die Seile dagegen im unteren Klemmbalken abgefangen.

Im bisherigen Stand der Technik wird der Hydrauliköl Zu- und Ablauf des Führungshubzylinders durch ein Ventil kontrolliert, welches mit einem fest voreingestellten Spannungswert (0-10V entsprechend der Ventilauslenkung 0-100%) angesteuert wird. Die anderen Hubzylinder werden mit einer positionsbasierten Nachfolgerregelung geführt. Hierdurch wird der zu- und abfließende Volumenstrom des Hydrauliköls gesteuert. Da der zu- und abfließende Volumenstrom aber lastabhängig ist, kann im bisherigen Stand der Technik keine direkte Aussage darüber getroffen werden, wie schnell sich die Klemm- und Hub-Vorrichtung wirklich bewegt und ob eine ausreichende Menge Hydrauliköl in die einzelnen Hubzylinder nachgefördert werden kann. Bei einer Lastrichtung entgegengesetzt zur Schwerkraft (Last nach oben) etwa ist die Geschwindigkeit der Hubzylinder zu hoch, da die Last das Hydrauliköl zu schnell aus der Hubzylinderoberseite heraus presst. Da der fest voreingestellte Spannungswert, der zur Steuerung des Ventils auf einem lastfreien Fall basiert, nicht variabel angepasst werden kann, können die Pumpen nicht genug Hydrauliköl auf der Hubzylinderunterseite nachfördern, da diese nur für die benötigte Hydraulikölmenge für die projektierte Geschwindigkeit der Hubzylinder ausgelegt sind. Übersteigt das in den Hubzylinderkammern benötigte Volumen an Hydrauliköl das tatsächlich durch die Pumpen erbrachte Volumen, so bricht der Druck in den Hubzylinderkammern ein und es bildet sich je nach Auf- oder Abwärtsfahrt mit Last in der entsprechenden Zylinderkammer ein Vakuum. Die Folge ist, dass die bisherige Konfiguration dazu beiträgt die Klemm- und Hub-Vorrichtung an Ein- und Mehrseil-Koepe-Förderanlagen in kritischen Betriebszuständen zu betreiben. Des Weiteren bietet die bisherige Konfiguration keine Möglichkeit auftretende Fehler frühzeitig zu erkennen und entsprechende Gegenmaßnahmen einzuleiten, bevor es überhaupt zu kritischen Betriebszuständen kommen kann.

Die Aufgabe der vorliegenden Erfindung ist es daher, kritische Betriebszustände der Klemm- und Hub-Vorrichtung an Ein- und Mehrseil-Koepe-Förderanlagen zu vermeiden und die Nachteile des bekannten Standes der Technik zu beheben.

Diese Aufgabe wird durch ein Verfahren zur Geschwindigkeitsregelung einer Klemm- und Hub-Vorrichtung gemäß den Merkmalen des unabhängigen Anspruchs 1 und mittels einer Regelvorrichtung gemäß den Merkmalen des unabhängigen Anspruchs 7 erreicht, wobei zweckmäßige Ausführungsformen durch die Merkmale der jeweiligen abhängigen Ansprüche beschrieben sind.

Aus dem Dokument Dorman Long Technology Limited "DL-P40 Release 3.029.xx Computer Control System - Operations and Maintenance Manual", 3. Januar 2012 (2012-01-03), ist ein Verfahren zur Geschwindigkeitsregelung einer Klemm- und Hub-Vorrichtung, sowie eine Regelvorrichtung zur Umsetzung des Verfahrens bekannt.

Die Erfindung betrifft ein Verfahren zur Geschwindigkeitsregelung einer Klemmund Hub-Vorrichtung mit mindestens einem Führungszylinder. Ein hydraulisches Fluid kann durch jeweils eine Öffnung in mindestens zwei Zylinderkammern des mindestens einen Führungszylinders über mindestens eine Pumpeneinrichtung und über mindestens eine Ventileinrichtung je Zylinderkammer zum Heben und Senken von Lasten zu- und abfließen. Der Ventilöffnungsgrad der jeweils mindestens einen Ventileinrichtung ist nach Maßgabe der Erfindung dabei abhängig von der Arbeitsrichtung der Vorrichtung, einer Sollgeschwindigkeit und der aktuellen Geschwindigkeit des mindesten einen Führungszylinders veränderbar. Das Verfahren verändert den Ventilöffnungsgrad vorzugsweise derart, dass in Abhängigkeit der aktuellen Geschwindigkeit des mindesten einen Führungszylinders und einer Sollgeschwindigkeit eine ausreichende Menge hydraulisches Fluid je nach Arbeitsrichtung der Vorrichtung in die jeweilige Zylinderkammer nachgefördert werden kann. Durch dieses Verfahren in der beschriebenen Art und Weise, kann das in den Zylinderkammern benötigte Volumen an hydraulischem Fluid durch die Pumpeneinrichtung jederzeit erbracht werden, so dass der Druck in den Zylinderkammern zu keinem Zeitpunkt einbricht und es sich je nach Auf- oder Abwärtsfahrt mit Last in der entsprechenden Zylinderkammer kein Vakuum bilden kann. Der Vorteil des Verfahrens ist, dass die Klemm- und Hub-Vorrichtung an Ein- und Mehrseil-Koepe-Förderanlagen außerhalb kritischer Betriebszustände betrieben werden kann. Dies führt zu einem höheren Wirkungsgrad der Anlage, einer höheren Lebensdauer sowie zu einer erhöhten Betriebssicherheit.

Vorzugsweise wird die Ventileinrichtung der sich füllenden Zylinderkammer geöffnet. Bei einer Abweichung der aktuellen Geschwindigkeit des Führungszylinders von der Sollgeschwindigkeit wird der Ventilöffnungsgrad der Ventileinrichtung der sich leerenden Zylinderkammer verändert, wobei der Ventilöffnungsgrad der Ventileinrichtung der sich füllenden Zylinderkammer an den Ventilöffnungsgrad der Ventileinrichtung der sich entleerenden Zylinderkammer gekoppelt ist. Durch diese Verfahrensschritte kann im lastabhängigen Fall die aktuelle Geschwindigkeit des Führungszylinders in der Klemm- und Hub-Vorrichtung jederzeit bestimmt werden. Durch das ständige Abgleichen der aktuellen Geschwindigkeit des Führungszylinders mit einer Sollgeschwindigkeit, kann frühzeitig bei entsprechender Abweichung der Ventilöffnungsgrad so verändert werden, dass eine ausreichende Menge hydraulischen Fluides in die jeweilige Zylinderkammer nachgefördert werden kann. Durch diese Verfahrensschritte werden Gegenmaßnahmen ergriffen, um kritische Betriebszustände der Klemm und Hub Vorrichtung an Ein- und Mehrseil-Koepe-Förderanlagen zu vermeiden. Des Weiteren kann die Klemm- und Hub-Vorrichtung durch dieses Verfahren unabhängig von der Last -und/oder Verfahrrichtung mit konstanter Geschwindigkeit bewegt werden.

Das Verfahren zur Geschwindigkeitsregelung einer Klemm- und Hub-Vorrichtung umfasst weiterhin eine Nachregelung. Die Klemm- und Hub-Vorrichtung umfasst dabei neben dem mindestens einen Führungszylinder weiter mindestens einen Slave-Zylinder. Zur Nachregelung des mindestens einen Slave-Zylinders in Bezug zu dem mindestens einen Führungszylinder kann das hydraulische Fluid durch jeweils eine Öffnung in mindestens zwei Zylinderkammern des mindestens einen Slave-Zylinders über die mindestens eine Pumpeneinrichtung und über zumindest eine weitere Ventileinrichtung je Zylinderkammer zum Heben und Senken von Lasten zu- und abfließen. Der Ventilöffnungsgrad der jeweils zumindest einen weiteren Ventileinrichtung ist abhängig von der absoluten Verfahrposition des mindestens einen Führungszylinders und der aktuellen Verfahrposition des mindestens einen Slave-Zylinders veränderbar. Durch die Nachregelung des mindestens einen Slave-Zylinders bezüglich des mindestens einen Führungszylinders in der oben beschriebenen Art und Weise wird die absolute Verfahrposition aller vorhandenen Zylinder in der Klemm- und Hub-Vorrichtung gleich gehalten, somit kann der obere Klemmbalken der Klemm- und Hub-Vorrichtung in Waage gehalten werden.

Bevorzugt kann das Verfahren für die Nachregelung des mindestens einen Slave-Zylinders weiter das Bestimmen der absoluten Verfahrposition des mindestens einen Führungszylinders und das Bestimmen der aktuellen Verfahrposition des mindestens einen Slave-Zylinders umfassen. Die absolute Verfahrposition des mindestens einen Führungszylinders wird dabei mit der aktuellen Verfahrpsoition des mindestens einen Slave-Zylinders verglichen. Vorzugsweise wird die Ventileinrichtung der sich füllenden Zylinderkammer des mindestens einen Slave-Zylinders geöffnet. Bei einer Abweichung der aktuellen Verfahrposition des mindestens einen Slave-Zylinders von der absoluten Verfahrposition des mindestens einen Führungszylinders wird der Ventilöffnungsgrad der zumindest einen weiteren Ventileinrichtung der sich entleerenden Zylinderkammer des mindestens einen Slave-Zylinders verändert, wobei der Ventilöffnungsgrad der zumindest einen weiteren Ventileinrichtung der sich füllenden Zylinderkammer an den Ventilöffnungsgrad der zumindest einen weiteren Ventileinrichtung der sich entleerenden Zylinderkammer gekoppelt ist. Durch diese Verfahrensschritte wird frühzeitig eine Verfahrpositionsabweichung des mindestens einen Slave-Zylinders in Bezug auf den mindestens einen Führungszylinder erkannt. Des Weiteren wird der Ventilöffnungsgrad der zumindest einen weiteren Ventileinrichtung der sich entleerenden Zylinderkammer des mindestens einen Slave-Zylinders so verändert, dass die absolute Verfahrposition aller vorhandenen Zylinder in der Klemm- und Hub-Vorrichtung gleich gehalten werden. Somit kann der obere Klemmbalken der Klemm- und Hub-Vorrichtung in Waage gehalten werden und die Klemm- und Hub-Vorrichtung kann unabhängig von der Last - und/oder Verfahrrichtung mit konstanter Geschwindigkeit bewegt werden.

Das Verfahren zur Geschwindigkeitsregelung kann bevorzugt weiter das Bestimmen der aktuellen Geschwindigkeit des mindesten einen Führungszylinders mittels eines Wegmesssystems umfassen. Dabei wird die aktuelle Geschwindigkeit des mindestens einen Führungszylinders auf Basis der Wegänderung des Wegmesssystems über die Verfahrzeit bestimmt. Damit wird eine präzise Messung der aktuellen Geschwindigkeit des mindesten einen Führungszylinders bei einfacher Montage und Wartung bereitgestellt.

In einer bevorzugten Ausführungsform kann das Verfahren weiter das Bestimmen des aktuellen Druckwertes in den mindestens zwei Zylinderkammern des mindestens einen Führungszylinders und/oder des mindestens einen Slave-Zylinders umfassen. Dabei wird der aktuelle Druckwert mit einem Solldruckwert verglichen. Somit kann die Klemm- und Hub-Vorrichtung durch eine zusätzliche Absicherung überwacht werden und bei zu stark abweichenden Drücken ebenfalls entsprechende Sicherheitsmaßnahmen auslösen. Dadurch wird die Betriebssicherheit der Anlage zusätzlich erhöht.

Bei dieser Ausführungsform wird der aktuelle Druckwert vorzugsweise mit Hilfe mindestens eines Druckschalters, mit einem digitalen Schaltpunkt und einem analogen Ausgangswert, bestimmt. Dadurch sind die Vorteile in Bezug auf Genauigkeit, Lebensdauer und Funktionalität des Druckschalters gegeben, sowie ist eine schnelle und einfache Einstellung möglich.

Die Erfindung betrifft des Weiteren eine Regelvorrichtung zur Durchführung eines Verfahrens mit den oben genannten Verfahrensmerkmalen, wobei die Regelvorrichtung zur Geschwindigkeitsregelung einer Klemm- und Hub-Vorrichtung mit mindestens einem Führungszylinder mindestens ein Geschwindigkeitssensorelement umfassen kann, um die aktuelle Geschwindigkeit des mindestens einen Führungszylinders zu bestimmen. Die Regelvorrichtung kann weiterhin mindestens einen Regler umfassen, um die aktuelle Geschwindigkeit des mindestens einen Führungszylinders mit einer Sollgeschwindigkeit zu vergleichen. Die Regelvorrichtung umfasst vorzugsweise zudem mindestens einen Stellmotor, um den Ventilöffnungsgrad der mindestens einen Ventilvorrichtung je Zylinderkammer des mindestens einen Führungszylinders bei Abweichung der aktuellen Geschwindigkeit des mindestens einen Führungszylinders von der Sollgeschwindigkeit zu verändern.

Die Regelvorrichtung kann durch das Verändern des Ventilöffnungsgrades der mindestens einen Ventilvorrichtung je Zylinderkammer des mindestens einen Führungszylinders bei Abweichung der aktuellen Geschwindigkeit des mindestens einen Führungszylinders von der Sollgeschwindigkeit automatisch kritische Betriebszustände der Klemm- und Hub-Vorrichtung vermeiden. Das Betreiben der Klemm- und Hub-Vorrichtung außerhalb kritischer Betriebszustände führt zu einem höheren Wirkungsgrad der Anlage, einer höheren Lebensdauer sowie zu einer erhöhten Betriebssicherheit.

Die Regelvorrichtung umfasst zur Nachregelung mindestens eines Slave-Zylinders in Bezug auf den mindestens einen Führungszylinder in einer Klemm- und Hub-Vorrichtung mindestens ein Positionssensorelement, um die aktuelle Verfahrposition des mindestens einen Slave-Zylinders zu bestimmen. Die Regelvorrichtung umfasst weiterhin zumindest einen weiteren Regler, um die absolute Verfahrposition des mindestens einen Führungszylinders mit der aktuellen Verfahrposition des mindestens einen Slave-Zylinders zu vergleichen. Die Regelungsvorrichtung umfasst zudem zumindest einen weiteren Stellmotor, um den Ventilöffnungsgrad der mindestens einen Ventilvorrichtung je Zylinderkammer des mindestens einen Slave-Zylinders bei Abweichung der aktuellen Verfahrposition des mindestens einen Slave-Zylinders von der absoluten Verfahrposition des mindestens einen Führungszylinders zu verändern. Durch diese Regelvorrichtung wird frühzeitig eine Verfahrpositionsabweichung des mindestens einen Slave-Zylinders in Bezug auf den mindestens einen Führungszylinder erkannt. Des Weiteren wird der Ventilöffnungsgrad der zumindest einen weiteren Ventileinrichtung je Zylinderkammer des mindestens einen Slave-Zylinders so verändert, dass die absolute Verfahrposition aller vorhandenen Zylinder in der Klemm- und Hub-Vorrichtung gleich gehalten werden. Somit kann der obere Klemmbalken der Klemm- und Hub-Vorrichtung in Waage gehalten werden und die Klemm- und Hub-Vorrichtung kann unabhängig von der Last -und/oder Verfahrrichtung mit konstanter Geschwindigkeit bewegt werden.

Bei der Regelvorrichtung kann vorzugsweise das mindestens eine Geschwindigkeitssensorelement als ein Wegmesssystem ausgebildet sein, bei dem die aktuelle Geschwindigkeit des mindesten einen Führungszylinders auf Basis der Wegänderung des Wegmesssystems über die Verfahrzeit bestimmt wird. Damit werden eine präzise Messung der aktuellen Geschwindigkeit und eine präzise Messung der absoluten Verfahrposition des mindesten einen Führungszylinders bei einfacher Montage und Wartung bereitgestellt.

In einer bevorzugten Ausführungsform der Regelvorrichtung kann das mindestens eine Positionssensorelemente jeweils als ein Positionsmesssystem ausgebildet sein. Damit wird eine präzise Messung der aktuellen Verfahrposition des mindestens einen Slave-Zylinders bei einfacher Montage und Wartung bereitgestellt.

Weiterhin bevorzugt ist es vorgesehen, dass der mindestens eine Regler der Regelvorrichtung als mindestens ein PI-Regler ausgebildet ist. Damit wird eine sehr schnelle Reaktionszeit mit einer exakten Ausregelung gewährleistet.

In einer bevorzugten Ausführungsform kann die Regelvorrichtung mindestens ein Drucksensorelement umfassen, um den aktuellen Druckwert in den mindestens zwei Zylinderkammern des mindesten einen Führungszylinders und/oder des mindesten einen Slave-Zylinders zu bestimmen. Dadurch wird die Betriebssicherheit der Anlage zusätzlich erhöht.

Bei der Regelvorrichtung kann vorzugsweise das mindestens eine Drucksensorelement als ein Druckschalter ausgebildet sein, bei dem mit einem digitalen Schaltpunkt und einem analogen Ausgangswert, der Druckwert bestimmt wird. Dadurch sind die Vorteile in Bezug auf Genauigkeit, Lebensdauer und Funktionalität des Druckschalters gegeben, sowie ist eine schnelle und einfache Einstellung möglich.

Des Weiteren kann die Regelvorrichtung mindesten einen Druckregler umfassen, um den aktuellen Druckwert in dem mindesten einen Führungszylinder und/oder in dem mindestens einen Slave-Zylinder mit einem Solldruckwert zu vergleichen. Somit kann die Klemmund Hub-Vorrichtung durch eine zusätzliche Absicherung überwacht werden und bei zu stark abweichenden Drücken ebenfalls entsprechende Sicherheitsmaßnahmen auslösen. Dadurch wird die Betriebssicherheit der Anlage zusätzlich erhöht.

Weitere Eigenschaften und Vorteile der Erfindung ergeben sich aus der folgenden, rein demonstrativen und in keiner Weise beschränkenden Beschreibung verschiedener Ausführungsformen der Erfindung unter Bezugnahme auf die beigefügten Zeichnungen. Insbesondere können die Merkmale der verschiedenen Ausführungsformen auch untereinander kombiniert werden. Es zeigt jeweils in den beigefügten Zeichnungen:
Figur 1 eine Klemm- und Hub-Vorrichtung
Figur 2 die Klemm- und Hub-Vorrichtung in Betrieb bei einer Last von oben in Verbindung mit einer Aufwärtsbewegung.
Figur 3 die Klemm- und Hub-Vorrichtung in Betrieb bei einer Last von unten in Verbindung mit einer Abwärtsbewegung.
Figur 4 zeigt eine Regelvorrichtung.
Figur 5 zeigt die Nachregelung des Slave-Zylinders, wobei die Verfahrposition als eine Funktion der Zeit dargestellt ist.
Figur 6 zeigt die Nachregelung des Slave-Zylinders, wobei die Geschwindigkeit als eine Funktion der Zeit dargestellt ist.

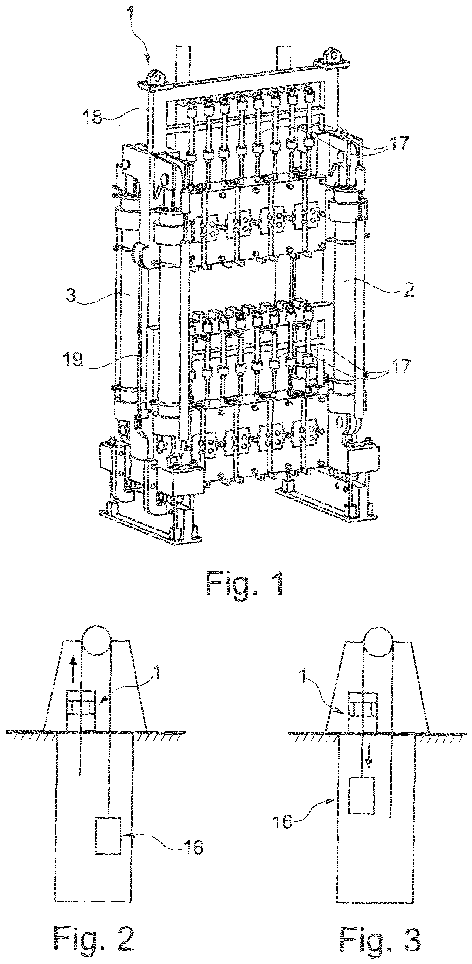

Figur 1 zeigt eine Klemm- und Hub-Vorrichtung 1 nach dem Stand der Technik wie sie in bekannter Vorgehensweise an Mehrseil-Koepe-Förderanlagen benutzt wird um alle Seile eines Fördertrums ohne aufwändige Vorbereitung gleichzeitig klemmen und halten, heben oder absenken zu können. Die Klemm- und Hub-Vorrichtung 1 umfasst dabei einen oberen Klemmbalken 18 und einen unteren Klemmbalken 19, an denen jeweils hydraulisch betätigte Klemmzylinder 17 angeordnet sind. Während der untere Klemmbalken 19 fest angeordnet ist, ist der obere Klemmbalken 18 beweglich ausgeführt und somit für das Heben und Senken von Lasten verantwortlich. Der obere Klemmbalken 18 ist dabei über mindestens einen Führungszylinder 2 und mindestens einen Slave-Zylinder 3 an der Vorrichtung 1 beweglich angebracht. Der mindestens eine Führungszylinder 2 und der mindestens eine Slave-Zylinder 3 sind beispielsweise jeweils als Hubzylinder ausgebildet.

Figur 2 zeigt eine Klemm- und Hub-Vorrichtung 1 in Betrieb. Die Last 16 wirkt dabei ziehend auf die Klemm- und Hub-Vorrichtung ein, d.h. die Lastrichtung ist aufwärts. Die Klemm- und Hub-Vorrichtung 1 wird vor der Inbetriebnahme in Position gebracht und die Führungszylinder 2 und Slave-Zylinder 3 werden zunächst ganz nach unten gefahren. Nun werden die Klemmzylinder 17 des unteren Klemmbalkens 19 geschlossen und beispielsweise das Gegengewicht demontiert. Das gesamte Gewicht der Last 16 wird nun von dem unteren Klemmbalken 19 gehalten. Daraufhin werden auch die Klemmzylinder 17 des oberen Klemmbalkens 18, der sich in einer unteren Verfahrposition befindet, geschlossen. Erst wenn dieser Vorgang abgeschlossen ist, werden die Klemmzylinder 17 des unteren Klemmbalkens 19 gelöst. Die Klemm- und Hub-Vorrichtung 1 ist nun für die Aufwärtsfahrt mit Last 16 bereit.

Bei dem Verfahren wird nun bei der Aufwärtsfahrt des oberen Klemmbalkens 18 mit Last 16 über eine Pumpeneinrichtung ein hydraulisches Fluid über eine Ventileinrichtung in die Öffnung einer zu füllenden Zylinderkammer gefördert. Bei der Ventileinrichtung handelt es sich beispielsweise um ein Ventil, das sowohl den einfließenden Volumenstrom als auch den abfließenden Volumenstrom steuern kann, dies geschieht etwa mittels eines linear, proportionalen Ansteuerverhältnisses zwischen der Eingangs- und Ausgangsseite. Die Ventileinrichtung der sich füllenden Zylinderkammer, in diesem Fall die untere Zylinderkammer des Führungszylinders 2 und der Slave-Zylinder 3, ist dabei geöffnet um einen Volumenstrom an hydraulischem Fluid in die entsprechende Zylinderkammer fließen zu lassen. Damit sich der obere Klemmbalken 18 nun überhaupt nach oben bewegt wird nun die Ventileinrichtung der sich zu leerenden Zylinderkammer, in diesem Fall die obere Zylinderkammer des Führungszylinders 2 und der Slave-Zylinder 3, geöffnet. Da es sich hierbei um eine Aufwärtsfahrt des oberen Klemmbalkens 18 mit Last 16 handelt, wirkt die Gewichtskraft der Last 16 mit auf den Führungszylinder 2 und die Slave-Zylinder (3). Dies beeinflusst direkt lastabhängig den abfließenden Volumenstrom des hydraulischen Fluides, beispielsweise Hydrauliköl.

Da jedoch die aktuelle Geschwindigkeit 11 des Führungszylinders 2 bei der Aufwärtsfahrt des oberen Klemmbalkens 18 mit Last 16 zu hoch wird, wird durch die Last 16 das hydraulische Fluid zu schnell aus der zu entleerenden Zylinderkammer, in diesem Fall die obere Zylinderkammer, heraus gepresst. Dadurch kann ein ausreichendes Nachfördern eines benötigten Volumenstroms an hydraulischem Fluid in die zu füllende Zylinderkammer des Führungszylinders 2 nicht gewährleistet werden, da die Pumpeneinrichtung nur für eine projektierte Geschwindigkeit ausgelegt sind, die benötigte Menge an hydraulischem Fluid in die zu füllende Zylinderkammer nachzufördern.

Damit die Pumpeneinrichtung immer den benötigten Volumenstrom in die zu füllende Zylinderkammer fördern kann, wird die aktuelle Geschwindigkeit 11 des Führungszylinders 2 durch das erfindungsgemäße Verfahren geregelt. Dabei wird die aktuelle Geschwindigkeit des Führungszylinders 2 jederzeit während der Aufwärtsfahrt durch eine Geschwindigkeitssensorelement bestimmt. Dieses Geschwindigkeitssensorelement kann als ein Wegmesssystem ausgebildet sein, wobei die aktuelle Geschwindigkeit 11 auf Basis der Wegänderung des Wegmesssystems 20 über die Verfahrzeit bestimmt wird. Das Verfahren vergleicht diese aktuelle Geschwindigkeit 11 des Führungszylinders 2 mit einer Sollgeschwindigkeit 10. Während das Verfahren die Ventileinrichtung der sich zu füllenden Zylinderkammer öffnet, verändert das Verfahren den Ventilöffnungsgrad der Ventileinrichtung der sich entleerenden Zylinderkammer derart, dass die aktuelle Geschwindigkeit 11 des Führungszylinders 2 eine Sollgeschwindigkeit 10 niemals übersteigt. Der Ventilöffnungsgrad der Ventileinrichtung der sich füllenden Zylinderkammer ist dabei an den Ventilöffnungsgrad der Ventileinrichtung der sich entleerenden Zylinderkammer gekoppelt. Der Ventilöffnungsgrad der Ventileinrichtung der sich füllenden Zylinderkammer und der Ventilöffnungsgrad der Ventileinrichtung der sich entleerenden Zylinderkammer stehen dabei in einem direkt proportionalen Verhältnis zueinander. Dadurch wird die Geschwindigkeit des Führungszylinders 2 in Lastrichtung konstant gehalten und niemals über einer Sollgeschwindigkeit bewegt. Daher kann die Pumpeneinrichtung immer den benötigten Volumenstrom in die zu füllende Zylinderkammer fördern und somit einen dortigen Druckabfall (Vakuum) verhindern.

Dies führt dazu, dass wenn die Last 16 nach dem Arbeitsvorgang wieder durch Schließen der Klemmzylinder 17 des unteren Klemmbalkens (19) und durch Lösen der Klemmzylinder 17 des oberen Klemmbalkens 18 vollständig von dem unteren Klemmbalken 19 übernommen wird, der Führungszylinder 2 nicht schlagartig nach unten fällt um das Vakuum auszugleichen.

Bei dem erfindungsgemäßen Verfahren wird der Führungszylinder 2 der Klemmund Hub-Vorrichtung 1 direkt über die beschriebene Geschwindigkeitsregelung gesteuert. Die zur Unterstützung des mindestens einen Führungszylinders 2 dienenden weiteren Zylinder der Klemm- und Hub-Vorrichtung 1, die sogenannten Slave-Zylinder 3, werden bei dem Verfahren hingegen nicht direkt über eine Geschwindigkeitsregelung gesteuert, sondern mittels einer indirekten Regelung, nämlich einer Nachregelung. Das Verfahren bestimmt dabei ständig die absolute Verfahrposition des mindestens einen Führungszylinders 2. Dies geschieht abermals über das Wegmesssystem, das fortlaufend eine Verfahrposition ermittelt. Die Slave-Zylinder sind im Wesentlichen auf die gleiche Art und Weise aufgebaut wie der Führungszylinder 2, weisen also mindestens zwei Zylinderkammern 4, eine zu füllende und eine zu leerende, und jeweils an die Kammern angeordnete Ventileinrichtungen 6 auf. Damit die Pumpeneinrichtung immer den benötigten Volumenstrom in die zu füllende Zylinderkammer fördern kann, wird die aktuelle Verfahrposition 13 der Slave-Zylinder 3 an die absolute Verfahrposition des Führungszylinders 2 gekoppelt. Das Verfahren vergleicht die absolute Verfahrposition des Führungszylinders 2 mit der aktuellen Verfahrposition 13 der Slave-Zylinder 3. Die aktuelle Verfahrposition 13 der Slave-Zylinder 3 wird über ein Positionsmesssensorelement bestimmt. Das Positionsmesssensorelement ist als ein Positionsmesssystem ausgebildet, das ständig die aktuelle Position ermittelt. In einer weiteren Ausführungsform kann das Positionsmesssensorelement auch als Wegmesssystem ausgebildet sein. Während das Verfahren die Ventileinrichtung der sich zu füllenden Zylinderkammer öffnet, verändert das Verfahren den Ventilöffnungsgrad der Ventileinrichtung der sich entleerenden Zylinderkammer derart, dass die aktuelle Verfahrposition 13 der Slave-Zylinder 3 gleich der absoluten Verfahrposition 12 des Führungszylinders 2 ist. Der Ventilöffnungsgrad der zumindest einen weiteren Ventileinrichtung der sich füllenden Zylinderkammer ist an den Ventilöffnungsgrad der zumindest einen weiteren Ventileinrichtung der sich entleerenden Zylinderkammer gekoppelt. Handelt es sich, wie etwa in Figur 2, um eine Aufwärtsfahrt mit Last 16, kann das Verfahren bei einer abweichenden Verfahrposition 13 der Slave-Zylinder 3 in Bezug auf die absolute Verfahrposition des Führungszylinders 2 diese so nachregeln, dass ein Vorauseilen und ein Nacheilen der Slave-Zylinder 3 bezüglich des Führungszylinders 2 unterbunden wird, und es sich somit eine im Wesentlichen konstante Geschwindigkeit aller Zylinder 2 und 3 einstellt. Dadurch kann der obere Klemmbalken 18 in Waage gehalten werden.

Das erfindungsgemäße Verfahren umfasst weiter das Überprüfen des Druckes in den jeweiligen Kammern der Zylinder. Dabei wird ständig ein aktueller Druckwert in den mindestens zwei Zylinderkammern 4 des Führungszylinders 2 und der Slave-Zylinder 3 bestimmt. Der aktuelle Druckwert 14 wird mit Hilfe eines Druckschalters, mit einem digitalen Schaltpunkt und einem analogen Ausgangswert ermittelt. Dieser ermittelte aktuelle Druckwert 14 wird fortlaufend mit einem Solldruckwert verglichen. Bricht ein Druck zu stark ein, werden entsprechende Sicherheitsmaßnahmen ausgelöst.

Figur 2 beschreibt, wie oben beschrieben, einen kritischen Betriebszustand bei einer ziehenden Last 16 von oben, in Verbindung mit einer Aufwärtsbewegung des oberen Klemmbalkens 18. Wie Figur 2, zeigt auch Figur 3 einen kritischen Betriebszustand bei jedoch einer ziehenden Last 16 von unten, in Verbindung mit einer Abwärtsbewegung des oberen Klemmbalkens 18. In diesen Betriebszuständen ist es möglich, dass die auf den oberen Klemmbalken 18 einwirkende Last 16 die Klemm- und Hub-Vorrichtung 1 derart beeinflusst, das die maximale Geschwindigkeit überschritten wird und die nachgeförderte Menge an hydraulischem Fluid über die für eine derart schnelle Bewegung benötigte Menge an hydraulischem Fluid hinaus ansteigt. Grundsätzlich gilt, dass bei allen vier Betriebszuständen, Aufwärtsfahrt mit Last von unten, Aufwärtsfahrt mit Last von oben, Abwärtsfahrt mit Last von oben und Abwärtsfahrt mit Last von unten, die direkte und indirekte Regeln (Geschwindigkeitsregelung und Nachregelung) der Klemm- und Hub-Vorrichtung 1 nach dem erfindungsgemäßen Verfahren aktiv ist. Dies bedeutet, dass die Klemm- und Hub-Vorrichtung 1 unabhängig von der Last- und/oder der Verfahrrichtung mit im Wesentlichen konstanter Geschwindigkeit bewegt wird.

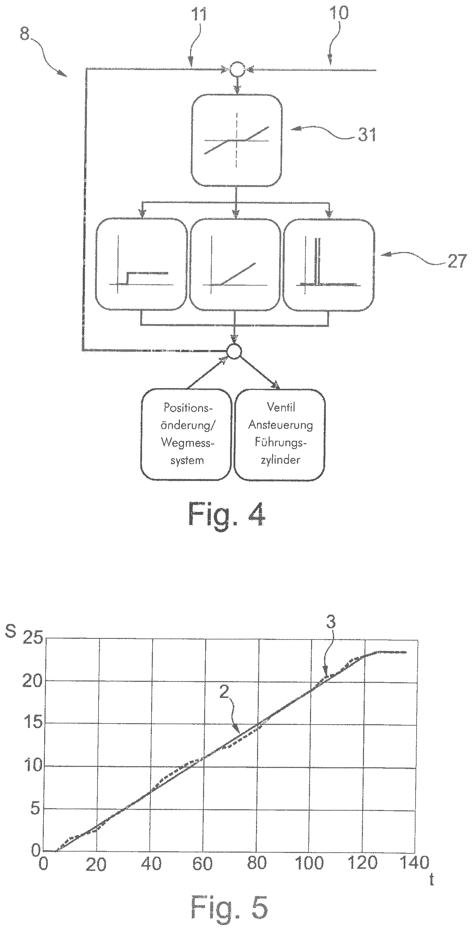

Figur 4 zeigt eine Regelvorrichtung 8 zur Durchführung einer Geschwindigkeitsregelung einer Klemm- und Hub-Vorrichtung 1 mit mindestens einem Führungszylinder 2 und zur Durchführung einer Nachregelung (nicht dargestellt) des mindestens einen Slave-Zylinders 3 in Bezug auf den mindestens einen Führungszylinder 2. Die aktuelle Geschwindigkeit 11 des Führungszylinders 2 wird mittels eines Geschwindigkeitssensorelementes 25 (nicht dargestellt) fortlaufend während des Heben und Senkens des oberen Klemmbalkens 19 bestimmt. Das Geschwindigkeitssensorelement ist dabei als ein Wegmesssystem ausgebildet, das auf Basis der Wegänderung/Positionsänderung über der Verfahrzeit die aktuelle Geschwindigkeit 11 präzise bestimmt. Die Regelvorrichtung 8 umfasst weiter einen Regler, der hier etwa als ein PID-Regler 27 ausgebildet ist, dieser kann jedoch auch als ein PI-Regler ausgebildet sein. Für diesen PID-Regler 27 ist eine Totzone 31 einstellbar, bei welcher der Regler inaktiv bleibt. Der PID-Regler 27 entscheidet anhand der errechneten aktuellen Geschwindigkeit 11, der eingestellten Totzone 31 und einer Sollgeschwindigkeit 10 die geeignete Reglerart. Bleibt die Regelabweichung nicht innerhalb der Totzone 31, also weicht die aktuelle Geschwindigkeit 11 außerhalb der Totzone 31 von der Sollgeschwindigkeit 10 ab, so spricht der PID-Regler 27 mit der entsprechenden Reglerart über einen Stellmotor die Ventileinrichtung der zu entleerenden Zylinderkammer des Führungszylinders 2 an, um den entsprechenden Ventilöffnungsgrad so zu verändern, damit die aktuelle Geschwindigkeit 11 des Führungszylinders 2 der Sollgeschwindigkeit 10 entspricht. Zugleich wird bei diesem Regelungsschritt die Ventileinrichtung der zu füllenden Zylinderkammer des Führungszylinders 2 durch den Regler über den Stellmotorgeöffnet, wobei der Ventilöffnungsgrad der Ventileinrichtung der sich füllenden Zylinderkammer und der Ventilöffnungsgrad der Ventileinrichtung der sich entleerenden Zylinderkammer in einem im Wesentlichen direkt proportionalen Verhältnis zueinander stehen, welches durch den Regler abgeleitet wird. Dadurch kann der Führungszylinder 2 in der Klemm- und Hub-Vorrichtung 1 ohne Druckabfall mit einer konstanten Geschwindigkeit betrieben werden, ohne in einen kritischen Betriebszustand zu gelangen.

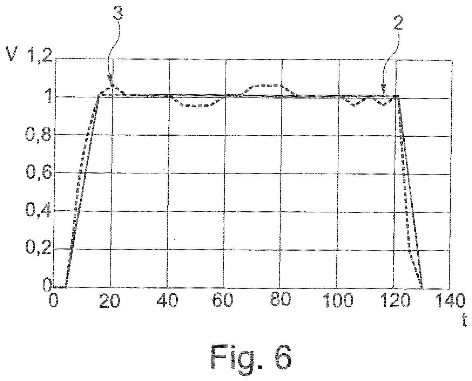

Die Regelvorrichtung 8 weist zur Durchführung der Nachregelung des mindestens einen Slave-Zylinders 3 in Bezug auf den Führungszylinder 2 ein Positionssensorelement 35 (nicht dargestellt) auf, um die aktuelle Verfahrposition 13 oder Positionsänderung des Slave-Zylinders 3 zu bestimmen. Das Positionssensorelement 35 ist als ein Positionsmesssystem ausgebildet, das die aktuelle Verfahrposition 13 des Slave-Zylinders 3 errechnet. In einer weiteren Ausführungsform kann das Positionsmesssystem als ein Wegmesssystem ausgebildet sein. Wie bereits oben beschrieben, wird die absolute Verfahrposition des Führungszylinders 2 zur Geschwindigkeitsregelung ständig bestimmt. Über einen weiteren Regler (nicht dargestellt), z.B. einen PI-Regler oder einen PID-Regler 27, gleicht die Regelvorrichtung 8 die ermittelten Positionen des Führungszylinders 2 und des Slave-Zylinders 3, also die absolute Verfahrposition und die aktuelle Verfahrposition 13, innerhalb einer Totzone ständig miteinander ab. Bleibt die Regelabweichung nicht innerhalb der Totzone 31, also weicht die aktuelle Verfahrposition 13 des Slave-Zylinders 3 außerhalb der Totzone 31 von der absoluten Verfahrposition 11 des Führungszylinders 2 ab, so spricht der PI-Regler oder der PID-Regler (27) mit der entsprechenden Reglerart über einen weiteren Stellmotor die Ventileinrichtung der zu entleerenden Zylinderkammer des Slave-Zylinders 3 an. Dadurch wird der entsprechende Ventilöffnungsgrad der zu entleerenden Zylinderkammer so verändert, damit die aktuelle Verfahrposition 13 des Slave-Zylinders 3 der absoluten Verfahrposition 11 des Führungszylinders 2 entspricht. Zugleich wird bei diesem Regelungsschritt die Ventileinrichtung der zu füllenden Zylinderkammer des Slave-Zylinders 3 durch den Regler über den Stellmotorgeöffnet, wobei der Ventilöffnungsgrad der Ventileinrichtung der sich füllenden Zylinderkammer und der Ventilöffnungsgrad der Ventileinrichtung der sich entleerenden Zylinderkammer in einem im Wesentlichen direkt proportionalen Verhältnis zueinander stehen, welches durch den Regler abgeleitet wird. In einer weiteren Ausführungsform kann bei der Nachregelung auch bei Regelabweichung die zu füllende Zylinderkammer des Slave-Zylinders 3 angesprochen werden und der Ventilöffnungsgrad der entsprechenden Ventileinrichtung verändert werden, um eine im Wesentlichen identische Verfahrposition bezüglich des Führungszylinders 2 zu gewährleisten. Durch die indirekte Regelung in Form der oben beschriebenen Nachregelung wird ein mögliches Voraus- und Nacheilen des Slave-Zylinders in Bezug auf den Führungszylinders unterbunden. Dadurch kann die absolute Vefahrposition und die absolute Geschwindigkeit aller in der Klemm- und Hub-Vorrichtung vorhandener Hubzylinder 2 und 3 nahezu gleich gehalten werden, um den oberen Klemmbalken 19 in Waage zu halten. Aufgrund dieses regelungstechnischen Ablaufes kann es bei der Nachregelung zu kurzzeitigen Geschwindigkeitsabweichungen und damit Verfahrpositionsabweichungen des Slave-Zylinders 3 in Bezug auf den Führungszylinder 2 kommen, wie in Figur 5 und 6 dargestellt ist. Während Figur 5 die Verfahrposition des Slave-Zylinders bei der Nachregelung als eine Funktion der Zeit dargestellt, zeigt Figur 6 die Nachregelung des Slave-Zylinders, wobei hier die Geschwindigkeit als Funktion der Zeit dargestellt ist.

In einer weiteren Ausführungsform umfasst die Regelvorrichtung 8 mindestens ein Drucksensorelement (in Figur 4 nicht dargestellt), um den aktuellen Druckwert 14 in den jeweiligen Zylinderkammern 4 des Führungszylinders 2 zu bestimmen. In einer weiteren Ausführungsform umfasst die Regelvorrichtung 8 zusätzliche Drucksensorelemente 29 um zusätzlich den aktuellen Druckwert 14 in den jeweiligen Zylinderkammern 4 des Slave-Zylinders 3 zu bestimmen. Diese Drucksensorelemente 29 sind, je nach Ausführungsform, als Druckschalter ausgebildet. Mittels des Druckschalters 40 wird mit einem digitalen Schaltpunkt und einem analogen Ausgangswert, der aktuelle Druckwert 14 in den Kammern bestimmt. Um die Betriebssicherheit der Klemm- und Hub-Vorrichtung 1 zusätzlich zu erhöhen, umfasst die Regelvorrichtung 8 in einer Ausführungsform einen Druckregler (nicht dargestellt). Anhand des Druckreglers 41 wird, je nach Ausführungsform, der aktuelle Druckwert 14 in den jeweiligen Zylinderkammern 4 mit einem Solldruckwert verglichen. Bei Abweichung des aktuellen Druckwertes 14 außerhalb einer weiteren Totzone wird gegebenenfalls der Ventilöffnungsgrad der Ventileinrichtung der zu füllenden oder zu entleerenden Zylinderkammer des Führungszylinders 2 oder des Slave-Zylinders 3 so verändert, um den Solldruckwert in den Zylinderkammern 4 wieder zu erreichen. In einer weiteren Ausführungsform können bei zu hoher Druckabweichung weitere, dem Fachmann naheliegende Sicherheitsmaßnahmen, wie etwa Abschaltung der Anlage, getroffen werden, um die Betriebssicherheit der Anlage zu gewährleisten.

### Bezugszeichenliste:

- 1: Klemm- und Hub-Vorrichtung
- 2: Führungszylinder
- 3: Slave-Zylinder
- 8: Regelvorrichtung
- 10: Sollgeschwindigkeit
- 11: aktuelle Geschwindigkeit
- 16: Last
- 17: Klemmzylinder
- 18: oberer Klemmbalken
- 19: unterer Klemmbalken
- 27: PID-Regler
- 31: Totzone

## Patentansprüche

1. Verfahren zur Geschwindigkeitsregelung einer Klemm- und Hub-Vorrichtung (1) mit mindestens einem Führungszylinder (2), wobei ein hydraulisches Fluid durch jeweils eine Öffnung in mindestens zwei Zylinderkammern des mindestens einen Führungszylinders (2) über mindestens eine Pumpeneinrichtung und über mindestens eine Ventileinrichtung je Zylinderkammer zum Heben und Senken von Lasten (16) zu- und abfließen kann, **dadurch gekennzeichnet, dass** der Ventilöffnungsgrad der jeweils mindestens einen Ventileinrichtung abhängig von der Arbeitsrichtung der Vorrichtung (1), einer Sollgeschwindigkeit (10) und der aktuellen Geschwindigkeit (11) des mindestens einen Führungszylinders (2) veränderbar ist wobei die Klemm- und Hub-Vorrichtung (1) weiter mindestens einen Slave-Zylinder (3) umfasst, wobei zur Nachregelung des mindestens einen Slave-Zylinders (3) in Bezug zu dem mindestens einen Führungszylinder (2) das hydraulisches Fluid durch jeweils eine Öffnung in mindestens zwei Zylinderkammern des mindestens einen Slave-Zylinders (3) über die mindestens eine Pumpeneinrichtung und über zumindest eine weitere Ventileinrichtung je Zylinderkammer zum Heben und Senken von Lasten (16) zu- und abfließen kann, wobei der Ventilöffnungsgrad der jeweils zumindest einen weiteren Ventileinrichtung abhängig von der absoluten Verfahrposition des mindestens einen Führungszylinders (2) und der aktuellen Verfahrposition des mindestens einen Slave-Zylinders (2) veränderbar ist.

2. Verfahren nach Anspruch 1, wobei das Verfahren umfasst:
- Bestimmen der Arbeitsrichtung der Vorrichtung (1);
- Bestimmen der aktuellen Geschwindigkeit (11) des mindestens einen Führungszylinders (2);
- Vergleichen der aktuellen Geschwindigkeit (11) des mindestens einen Führungszylinders (2) mit der Sollgeschwindigkeit (10);
- Öffnen der Ventileinrichtung der sich füllenden Zylinderkammer; und
- Verändern des Ventilöffnungsgrades der Ventileinrichtung der sich entleerenden Zylinderkammer bei Abweichung der aktuellen Geschwindigkeit (11) des Führungszylinders (2) von der Sollgeschwindigkeit (10), wobei der Ventilöffnungsgrad der Ventileinrichtung der sich füllenden Zylinderkammer an den Ventilöffnungsgrad der Ventileinrichtung der sich entleerenden Zylinderkammer gekoppelt ist.

3. Verfahren nach Anspruch 2, wobei das Verfahren umfasst:
- Bestimmen der absoluten Verfahrposition des mindestens einen Führungszylinders (2);
- Bestimmen der aktuellen Verfahrposition des mindestens einen Slave-Zylinders (3);
- Vergleichen der absoluten Verfahrposition des mindestens einen Führungszylinders (2) mit der aktuellen Verfahrposition des mindestens einen Slave-Zylinders;
- Öffnen der Ventileinrichtung der sich füllenden Zylinderkammer; und
- Verändern des Ventilöffnungsgrades der zumindest einen weiteren Ventileinrichtung der sich entleerenden Zylinderkammer des mindestens einen Slave-Zylinders (3) bei Abweichung der aktuellen Verfahrposition des mindestens einen Slave-Zylinders (3) von der absoluten Verfahrposition des mindestens einen Führungszylinders (2), wobei der Ventilöffnungsgrad der zumindest einen weiteren Ventileinrichtung der sich füllenden Zylinderkammer an den Ventilöffnungsgrad der zumindest einen weiteren Ventileinrichtung der sich entleerenden Zylinderkammer gekoppelt ist.

4. Verfahren nach einem der vorhergehenden Ansprüche, wobei die aktuelle Geschwindigkeit (11) des mindesten einen Führungszylinders (2) auf Basis der Wegänderung eines Wegmesssystems über die Verfahrzeit bestimmt wird.

5. Verfahren nach einem der vorhergehenden Ansprüche, wobei das Verfahren weiter umfasst:
- Bestimmen des aktuellen Druckwertes in den mindestens zwei Zylinderkammern des mindestens einen Führungszylinders (2) und/oder des mindestens einen Slave-Zylinders (3); und
- Vergleichen des aktuellen Druckwertes mit einem Solldruckwert.

6. Verfahren nach Anspruch 5, wobei der aktuelle Druckwert mit Hilfe mindestens eines Druckschalters , mit einem digitalen Schaltpunkt und einem analogen Ausgangswert, bestimmt wird.

7. Regelvorrichtung (8) zur Durchführung eines Verfahrens mit den Merkmalen der Ansprüche 1 bis 6, wobei die Regelvorrichtung (8) zur Geschwindigkeitsregelung einer Klemm- und Hub-Vorrichtung (1) mit mindestens einem Führungszylinder (2) umfasst:
- Mindestens ein Geschwindigkeitssensorelement, um die aktuelle Geschwindigkeit des mindestens einen Führungszylinders (2) zu bestimmen;
- Mindestens einen Regler, um die aktuelle Geschwindigkeit des mindestens einen Führungszylinders (2) mit einer Sollgeschwindigkeit (10) zu vergleichen; und
- Mindestens einen Stellmotor, um den Ventilöffnungsgrad der mindestens einen Ventilvorrichtung je Zylinderkammer des mindestens einen Führungszylinders (2) bei Abweichung der aktuellen Geschwindigkeit (11) des mindestens einen Führungszylinders (2) von der Sollgeschwindigkeit (10) zu verändern wobei die Regelvorrichtung (8) zur Nachregelung mindestens eines Slave-Zylinders (3) in Bezug auf den mindestens einen Führungszylinder (2) in einer Klemm- und Hub-Vorrichtung (1) weiterhin umfasst:
- Mindestens ein Positionssensorelement, um die aktuelle Verfahrposition des mindestens einen Slave-Zylinders (3) zu bestimmen;
- Zumindest einen weiteren Regler, um die absolute Verfahrposition des mindestens einen Führungszylinders (2) mit der aktuellen Verfahrposition des mindestens einen Slave-Zylinders (3) zu vergleichen; und
- Zumindest einen weiteren Stellmotor, um den Ventilöffnungsgrad der mindestens einen Ventilvorrichtung je Zylinderkammer des mindestens einen Slave-Zylinders (3) bei Abweichung der aktuellen Verfahrposition des mindestens einen Slave-Zylinders (3) von der absoluten Verfahrposition des mindestens einen Führungszylinders (2) zu verändern.

8. Regelvorrichtung (8) nach Anspruch 7, wobei das mindestens eine Geschwindigkeitssensorelement als ein Wegmesssystem ausgebildet ist, bei dem die aktuelle Geschwindigkeit (11) des mindesten einen Führungszylinders (2) auf Basis der Wegänderung des Wegmesssystems über die Verfahrzeit bestimmt wird.

9. Regelvorrichtung (8) nach Anspruch 8, wobei das mindestens eine Positionssensorelement als ein Positionsmesssystem ausgebildet ist.

10. Regelvorrichtung (8) nach Anspruch 7, wobei der mindestens eine Regler als mindestens ein PI-Regler ausgebildet ist.

11. Regelvorrichtung (8) nach einem der vorhergehenden Ansprüche, wobei die Regelvorrichtung (8) mindestens ein Drucksensorelement umfasst, um den aktuellen Druckwert in den mindestens zwei Zylinderkammern des mindesten einen Führungszylinders (2) und/oder des mindesten einen Slave-Zylinders (3) zu bestimmen.

12. Regelvorrichtung (8) nach Anspruch 11, wobei das mindestens eine Drucksensorelement als ein Druckschalter ausgebildet ist, bei dem mit einem digitalen Schaltpunkt und einem analogen Ausgangswert, der aktuelle Druckwert bestimmt wird.

13. Regelvorrichtung (8) nach Anspruch 11, wobei die Regelvorrichtung (8) mindesten einen Druckregler umfasst, um den aktuellen Druckwert in dem mindesten einen Führungszylinder (2) und/oder in dem mindestens einen Slave-Zylinder (3) mit einem Solldruckwert zu vergleichen.

## Claims

1. A method for controlling the speed of a clamping and lifting device (1) with at least one guide cylinder (2), wherein a hydraulic fluid can flow in and out through a respective opening in at least two cylinder chambers of the at least one guide cylinder (2) via at least one pump device and at least one valve device for raising and lowering loads (16), **characterized in that** the valve opening degree of the respective at least one valve device may be varied depending upon the operating direction of the device (1), a nominal speed (10) and the actual speed (11) of the at least one guide cylinder (2), wherein the clamping and lifting device (1) further comprises at least one slave cylinder (3), wherein for the purpose of adjusting the at least one slave cylinder (3) with respect to the at least one guide cylinder (2), the hydraulic fluid can flow in and out through an opening in at least two cylinder chambers of the at least one slave cylinder (3) via the at least one pump device and at least one further valve device per cylinder chamber, for raising and lowering loads (16), wherein the valve opening degree of the respective at least one further valve device may be varied dependent upon the absolute displacement position of the at least one guide cylinder (2) and the current displacement position of the at least one slave cylinder (3).

2. The method of claim 1, wherein the method comprises:
- determining the operating direction of the device (1);
- determining the current speed (11) of the at least one guide cylinder (2);
- comparing the current speed (11) of the at least one guide cylinder (2) with the desired speed (10);
- opening the valve device of the filling cylinder chamber; and
- varying the valve opening degree of the emptying cylinder chamber upon detection of a deviation of the current speed (11) of the guide cylinder (2) from the desired speed (10), wherein the valve opening degree of the valve device of the filling cylinder chamber is coupled to the valve opening degree of the valve device of the emptying cylinder chamber.

3. The method of claim 2, wherein the method comprises:
- determining the absolute displacement position of the at least one guide cylinder (2);
- determining the current displacement position of the at least one slave cylinder (3);
- comparing the absolute displacement position of the at least one guide cylinder (2) with the current displacement position of the at least one slave cylinder;
- opening the valve device of the filling cylinder chamber; and
- varying the valve opening degree of the at least one further valve device of the emptying cylinder chamber of the at least one slave cylinder (3) if the current displacement position of the at least one slave cylinder (3) deviates from the absolute displacement position of the at least one guide cylinder (2), wherein the valve opening degree of the at least one further valve device of the filling cylinder chamber is coupled to the valve opening degree of the at least one further valve device of the emptying cylinder chamber.

4. Method according to any one of the preceding claims, wherein the current speed (11) of the at least one guide cylinder (2) is determined on the basis of the path change of a distance measuring system over the travel time.

5. Method according to any one of the preceding claims, the method further comprising:
- determining the current pressure value in the at least two cylinder chambers of the at least one guide cylinder (2) and/or the at least one slave cylinder (3); and
- comparing the current pressure value with a desired pressure value.

6. Method according to claim 5, wherein the current pressure value is determined by means of at least one pressure switch, with a digital switching point and an analogue output value.

7. A control device (8) for carrying out a method with the features of claims 1 to 6, wherein the regulating device (8) for speed control of a clamping and lifting device (1) with at least one guide cylinder (2) comprises:
- at least one speed sensor element for determining the current speed of the at least one guide cylinder (2);
- at least one controller for comparing the actual speed of the at least one guide cylinder (2) with a desired speed (10); and
- at least one adjusting motor for changing the valve opening degree of the at least one valve device per cylinder chamber of the at least one guide cylinder (2) when the current speed (11) of the at least one guide cylinder (2) deviates from the desired speed (10)
wherein the control device (8) for adjusting at least one slave cylinder (3) with respect to the at least one guide cylinder (2) in a clamping and lifting device (1) further comprises:
- at least one position sensor element for determining the current displacement position of the at least one slave cylinder (3);
- at least one further controller for comparing the absolute travel position of the at least one guide cylinder (2) with the current travel position of the at least one slave cylinder (3); and
- at least one further adjusting motor for changing the valve opening degree of the at least one valve device per cylinder chamber of the at least one slave cylinder (3) when the current displacement position of the at least one slave cylinder (3) deviates from the absolute displacement position of the at least one guide cylinder (2).

8. A control device (8) as claimed in claim 7, wherein the at least one speed sensor element is designed as a displacement measuring system in which the current speed (11) of the at least one guide cylinder (2) is determined over the travel time on the basis of the path change of the distance measuring system.

9. A control device (8) according to claim 8, wherein the at least one position sensor element is designed as a position measuring system.

10. A control device (8) according to claim 7, wherein the at least one controller is designed as at least one PI controller.

11. A control device (8) according to any of the preceding claims, wherein the control device (8) comprises at least one pressure sensor element to determine the current pressure value in the at least two cylinder chambers of the at least one guide cylinder (2) and the at least one slave cylinder (3).

12. A control device (8) according to claim 11, wherein the at least one pressure sensor element is designed as a pressure switch, in which the actual pressure value is determined with a digital switching point and an analogue output value.

13. A control device (8) according to claim 11, wherein the regulating device (8) comprises at least one pressure regulator to compare the current pressure value in the at least one guide cylinder (2) and/or in the at least one slave cylinder (3) with a desired pressure value.

## Revendications

1. Procédé de régulation de vitesse d'un appareil de serrage et de levage (1) avec au moins un maître-cylindre (2), dans lequel un fluide hydraulique peut être alimenté et évacué par une ouverture respective dans au moins deux chambres de cylindre du au moins un maître-cylindre (2) par l'intermédiaire d'au moins un dispositif de pompe et par l'intermédiaire d'au moins un dispositif de soupape par chambre de cylindre pour soulever et abaisser des charges (16), **caractérisé en ce que** le degré d'ouverture de soupape du au moins un dispositif de soupape respectif peut être modifié en fonction de la direction de travail de l'appareil (1), d'une vitesse cible (10) et de la vitesse actuelle (11) du au moins un maître-cylindre (2), dans lequel l'appareil de serrage et de levage (1) comprend en outre au moins un cylindre esclave (3), dans lequel, pour réajustage du au moins un cylindre esclave (3) par rapport au au moins un maître-cylindre (2), le fluide hydraulique peut être alimenté et évacué par une ouverture respective dans au moins deux chambres de cylindre du au moins un cylindre esclave (3) par l'intermédiaire d'au moins un dispositif de pompe pour soulever et abaisser des charges (16), dans lequel le degré d'ouverture de soupape du au moins un dispositif de soupape additionnel respectif peut être modifié en fonction de la position de déplacement absolue du au moins un maître-cylindre (2) et de la position de déplacement actuelle du au moins un cylindre esclave (3).

2. Procédé selon la revendication 1, dans lequel le procédé comprend :
- déterminer la direction de travail de l'appareil (1) ;
- déterminer la vitesse actuelle (11) du au moins un maître-cylindre (2) ;
- comparer la vitesse actuelle (11) du au moins un maître-cylindre (2) à la vitesse cible (10) ;
- ouvrir le dispositif de soupape de la chambre de cylindre qui se remplit ; et
- changer le degré d'ouverture de soupape du dispositif de soupape de la chambre de cylindre qui se vide lorsque la vitesse actuelle (11) du maître-cylindre (2) s'écarte de la vitesse cible (10), dans lequel le degré d'ouverture de soupape du dispositif de soupape de la chambre de cylindre qui se remplit est couplé au degré d'ouverture de soupape du dispositif de soupape de la chambre de cylindre qui se vide.

3. Procédé selon la revendication 2, dans lequel le procédé comprend :
- déterminer la position de déplacement absolue du au moins un maître-cylindre (2) ;
- déterminer la position de déplacement actuelle du au moins un cylindre esclave (3) ;
- comparer la position de déplacement absolue du au moins un maître-cylindre (2) à la position de déplacement actuelle du au moins un cylindre esclave ;
- l'ouverture du dispositif de soupape de la chambre de cylindre qui se remplit ; et
- changer le degré d'ouverture de soupape du au moins un dispositif de soupape additionnel de la chambre de cylindre qui se vide du au moins un cylindre esclave (3) lorsque la position de déplacement actuelle du au moins un cylindre esclave (3) s'écarte de la position de déplacement absolue du au moins un maître-cylindre (2), dans lequel le degré d'ouverture de soupape du au moins un dispositif de soupape additionnel de la chambre de cylindre qui se remplit est couplé au degré d'ouverture de soupape du au moins un dispositif de soupape additionnel de la chambre de cylindre qui se vide.

4. Procédé selon l'une quelconque des revendications précédentes, dans lequel la vitesse actuelle (11) du au moins un maître-cylindre (2) est déterminée sur la base de la variation de déplacement d'un système de mesure de déplacement sur la durée de déplacement.

5. Procédé selon l'une quelconque des revendications précédentes, dans lequel le procédé comprend en outre :
- déterminer la valeur de pression actuelle dans les au moins deux chambres cylindriques du au moins un maître-cylindre (2) et / ou du au moins un cylindre esclave (3) ; et
- comparer la valeur de pression actuelle à une valeur de pression cible.

6. Procédé selon la revendication 5, dans lequel la valeur de pression actuelle est déterminée à l'aide d'au moins un interrupteur de pression, avec un point de commutation numérique et une valeur de sortie analogique.

7. Appareil de régulation (8) pour effectuer un procédé avec les caractéristiques des revendications 1 à 6, dans lequel l'appareil de régulation (8) pour réguler la vitesse d'un appareil de serrage et de levage (1) avec au moins un maître-cylindre (2) comprend :
- au moins un élément capteur de vitesse, afin de déterminer la vitesse actuelle du au moins un maître-cylindre (2) ;
- au moins un contrôleur, afin de comparer la vitesse actuelle du au moins un maître-cylindre (2) à une vitesse cible (10); et
- au moins un servomoteur, afin de modifier le degré d'ouverture de soupape du au moins un dispositif de soupape par chambre de cylindre du au moins un maître-cylindre (2) lorsque la vitesse actuelle (11) du au moins un maître-cylindre (2) s'écarte de la vitesse cible (10),
dans lequel l'appareil de régulation (8) comprend en outre pour réajuster au moins un cylindre esclave (3) par rapport au au moins un maître-cylindre (2) dans un appareil de serrage et de levage (1) :
- au moins un élément capteur de position, afin de déterminer la position de déplacement de courant du au moins un cylindre esclave (3);
- au moins un contrôleur additionnel, afin de comparer la position de déplacement absolue du au moins un maître-cylindre (2) à la position de déplacement actuelle du au moins un cylindre esclave (3); et
- au moins un autre servomoteur additionnel, afin de modifier le degré d'ouverture de soupape du au moins un dispositif de soupape par chambre de cylindre du au moins un cylindre esclave (3) lorsque la position de déplacement actuelle du au moins un cylindre esclave (3) s'écarte de la position de déplacement absolue du au moins un maître-cylindre (2).

8. Appareil de régulation (8) selon la revendication 7, dans lequel le au moins un élément capteur de vitesse est configuré en tant que système de mesure de déplacement, la vitesse actuelle (11) du au moins un maître-cylindre (2) étant déterminée sur la base de la variation de déplacement du système de mesure de déplacement sur la durée de déplacement.

9. Appareil de régulation (8) selon la revendication 8, dans lequel le au moins un élément capteur de position est configuré comme un système de mesure de position.

10. Appareil de régulation (8) selon la revendication 7, dans lequel le au moins un contrôleur est configuré comme au moins un contrôleur PI.

11. Appareil de régulation (8) selon l'une quelconque des revendications précédentes, dans lequel l'appareil de régulation (8) comprend au moins un élément de capteur de pression, afin de déterminer la valeur de pression actuelle dans les au moins deux chambres de cylindre du au moins un maître-cylindre (2) et / ou du au moins un cylindre esclave (3).

12. Appareil de régulation (8) selon la revendication 11, dans lequel le au moins un élément de capteur de pression est configuré comme un commutateur de pression, dans lequel la valeur de pression actuelle est déterminée avec un point de commutation numérique et une valeur de sortie analogique.

13. Appareil de régulation (8) selon la revendication 11, dans lequel l'appareil de régulation (8) comprend au moins un contrôleur de pression, afin de comparer la valeur de pression actuelle dans au moins un maître-cylindre (2) et / ou dans au moins un cylindre esclave (3) à une valeur de pression cible.
